# EUROPÄISCHE PATENTANMELDUNG

(11) **EP 4 606 743 A1**
(43) Veröffentlichungstag der Anmeldung: **27.08.2025**
(21) Anmeldenummer: 25156498.5
(22) Anmeldetag: 07.02.2025
(51) Int. Cl.: B65G 47/22, B65G 47/14, B65G 43/08, B65C 9/02, B65C 9/06

(54) **BEARBEITUNGSSTATION ZUR FÖRDERUNG UND BEARBEITUNG DISKRETER PRODUKTE**

(30) Priorität: 20.02.2024 DE 102024104706
(71) Anmelder: WIPOTEC GmbH, 67657 Kaiserslautern (DE)
(72) Erfinder: Anders, Daniel, 67574 Osthofen (DE)
(74) Vertreter: Eder Schieschke & Partner mbB

(57) **Zusammenfassung**

Die Erfindung betrifft eine Vorrichtung und ein Verfahren zum Transportieren und Bearbeiten von Produkten (P), wobei eine die Produkte (P) bearbeitende Bearbeitungseinheit (B) mit einer Fördereinheit (M), einem Bearbeitungsmittel (D) und einem zugehörigen Hilfsmittel (H) relativ zu einem ortsfesten Grundkörper (G) quer zur Förderrichtung (X) verfahrbar ist, um die der Bearbeitungseinheit (B) zugeführten Produkte (P) an einer vorgegebenen Querposition aufnehmen zu können.

## Beschreibung

Die vorliegende Erfindung betrifft eine Bearbeitungsstation zur Förderung und Bearbeitung diskreter Produkte, die entlang einer Prozessstrecke transportiert werden. Häufig wird dabei eine Vielzahl gleichartiger Produkte (Fertigungslos, im Weiteren auch bezeichnet als Charge) in einem Bearbeitungsdurchlauf bearbeitet, bevor sich der Typ des Produkts oder die erforderliche Bearbeitung ändert.

Für die Bearbeitung der Produkte sind unterschiedliche Bearbeitungsmittel bekannt, die im Rahmen der Bearbeitung mit dem Produkt zusammenwirken. Dabei kann es sich beispielsweise um eine Leseeinheit zur Erfassung von Produktkennzeichnungen handeln. Denkbar sind auch Inspektionseinheiten, welche das Produkt auf bestimmte Eigenschaften untersuchen. Auch das Anbringen von Kennzeichnungen am Produkt gehört zu solchen Bearbeitungsvorgängen. Häufig werden die Produkte mithilfe einer Fördereinheit, zum Beispiel eines Transportbands oder eines vergleichbaren Transportmittels in einer Förderrichtung X in den Wirkbereich des Bearbeitungsmittels bewegt, und häufig ist für die erfolgreiche Bearbeitung eine spezielle Ausrichtung oder Positionierung des Produkts relativ zum Bearbeitungsmittel erforderlich.

So wäre es beispielsweise denkbar, den Druckkopf einer Druckeinheit relativ zum Produkt, insbesondere quer zur Förderrichtung X, so zum Produkt hin zu verfahren und/oder auszurichten, dass der Druckvorgang mit einem gewünschten Y-Abstand zwischen Produkt und Druckkopf ausgeführt werden kann. Alternativ könnte ein zunächst beliebig positioniertes Produkt zu einem ortsfest angeordneten Druckkopf ausgerichtet werden, indem es, beispielsweise von dem Förderband einer Zuführeinheit kommend, zunächst entlang einer Umspurstrecke auf eine am Druckkopf entlangführende Spur umgelenkt und/oder ausgerichtet wird, um anschließend das Bearbeitungsmittel in einer für die Bearbeitung optimalen Position bzw. Ausrichtung zu erreichen.

Diese Maßnahmen könnten jedoch schwierig werden, wenn beispielsweise der Drucckopf in einer zur Förderrichtung X orthogonal verlaufenden Querrichtung Y nicht frei verfahrbar ist, weil dessen Bewegung beispielsweise durch das Transportband blockiert wird. Andererseits benötigt eine Umspurstrecke zusätzlichen und kostbaren Bauraum entlang des Förderwegs der Prozessstrecke. Darüber hinaus ist häufig ein Hilfsmittel erforderlich, welches bei der Bearbeitung des Produkts mit dem Bearbeitungsmittel gezielt zusammenwirkt. Auch dieses Hilfsmittel muss bei der Bearbeitung oft eine bestimmte Position relativ zum Produkt einnehmen, was die korrekte Positionierung von Produkt, Bearbeitungsmittel und Hilfsmittel zusätzlich erschwert.

Aus der DE102009048442A1 ist ein Steuerungssystem bekannt, das eine zentrale Regeleinheit umfasst, die mit mehreren Sensoren verbunden ist, um Prozessparameter in Echtzeit zu erfassen. Das System integriert Aktuatoren, die basierend auf den gesammelten Daten von der Regeleinheit gesteuert werden, um die Funktionalität eines industriellen Prozesses zu optimieren. Die Konstruktion ermöglicht eine präzise Anpassung und Steuerung, wobei der Fokus auf Effizienzsteigerung und Flexibilität liegt.

Die DE 93 04 387 U1 beschreibt ein Behandlungsgerät mit einer Behandlungskammer, die aus einem Grundkörper und einer daran befestigten Haltevorrichtung besteht. Die Haltevorrichtung ist so gestaltet, dass sie einen sicheren Halt des zu behandelnden Gegenstands ermöglicht. Eine Arretierungseinrichtung ist integriert, um den Gegenstand in der Behandlungskammer zu fixieren und eine präzise Ausrichtung zu gewährleisten. Die Konstruktion der Vorrichtung ist darauf ausgelegt, sowohl Stabilität als auch Benutzerfreundlichkeit zu bieten und für eine einfache Montage und Wartung geeignet zu sein.

Die JP S63-107 592 U1 beschreibt eine Vorrichtung zur Handhabung von Werkstücken, die aus einer Grundplatte als Basis, einer darauf vertikal montierten Stützsäule zur strukturellen Unterstützung, einem an der Stützsäule befestigten Dreharm zur Rotation des Werkstücks sowie einem Greifmechanismus am Ende des Dreharms zum Erfassen und Halten des Werkstücks besteht. Eine Antriebseinheit steuert die Bewegung des Dreharms und des Greifmechanismus. Diese Konfiguration ermöglicht eine präzise Positionierung und effiziente Handhabung von Werkstücken in industriellen Anwendungen.

Aus der KR 20 0 206 740 Y1 ist ein Gerät bekannt, das eine Vorrichtung mit einer Basisstruktur umfasst, auf der eine Haltevorrichtung angebracht ist. Diese Haltevorrichtung dient dazu, ein Werkstück oder einen Gegenstand in einer stabilen Position zu halten. Zusätzlich enthält die Vorrichtung eine Steuerungsmechanik, die präzise Anpassungen der Haltevorrichtung ermöglicht. Ziel ist es, eine verbesserte Handhabung und Positionierung des Werkstücks sicherzustellen, wobei die Konstruktion auf einfache Bedienung und Vielseitigkeit ausgelegt ist.

Aufgabe der Erfindung war es daher, eine Bearbeitungsstation anzubieten, welche die vorgenannten Nachteile überwindet. Die Erfindung wird gelöst durch eine Bearbeitungsstation nach Anspruch 1 und ein Verfahren nach Anspruch 9. Weitere vorteilhafte Ausführungsformen ergeben sich aus den Unteransprüchen.

Die Erfindung beruht auf der Erkenntnis, ein Produkt für seine bevorstehende Bearbeitung relativ zum Bearbeitungsmittel dadurch positionieren zu können, dass das Bearbeitungsmittel gemeinsam mit dem Hilfsmittel und der Fördereinheit als Teil einer Bearbeitungseinheit gemeinsam in Querrichtung Y verschieblich sind. Dadurch wird es erfindungsgemäß möglich, die Bearbeitungseinheit bzw. deren Fördereinheit in eine für die erfolgreiche Bearbeitung vorgebbare Y-Position zu verfahren, bevor ein zu bearbeitendes Produkt die Fördereinheit erreicht. Durch geschickte Wahl der Y-Position erreicht das Produkt die Fördereinheit an einer für die anschließende Bearbeitung optimalen Querposition.

Die Bearbeitungseinheit ist dabei Teil einer erfindungsgemäßen Bearbeitungsstation, die zum Fördern und Bearbeiten von diskreten Produkten in einem Produktstrom ausgebildet ist, und sich dazu in einer Förderrichtung X, einer dazu orthogonalen, üblicherweise horizontal verlaufenden Querrichtung Y und einer Förderrichtung und Querrichtung orthogonal verlaufenden, üblicherweise senkrechten, Höhenrichtung Z erstreckt. Die Bearbeitungsstation umfasst einen im regulären Betrieb ortsfest angeordneten Grundkörper, beispielsweise ein auf einem Hallenboden angeordnetes Maschinengestell, welches zur Aufnahme und Fixierung unterschiedlicher Komponenten der Bearbeitungsstation ausgebildet ist.

Die Bearbeitungsstation weist eine Bearbeitungseinheit auf, die ihrerseits eine Fördereinheit, wenigstens ein Bearbeitungsmittel und wenigstens ein dem Bearbeitungsmittel zugeordnetes Hilfsmittel aufweist. Die Fördereinheit ist dazu ausgebildet, Produkte in Förderrichtung X entlang einer von der Fördereinheit gebildeten Förderebene zu transportieren. Beispielsweise kann die als eben angenommene Oberseite eines Transportbands der Fördereinheit die Förderebene bilden.

Das Bearbeitungsmittel ist zur Bearbeitung eines Produkts ausgebildet, während dieses von der Fördereinheit gefördert oder vorübergehend angehalten wird. Im Besonderen sind Bearbeitungsmittel gemeint, bei denen für die Bearbeitung ein vorgegebener Abstand des Bearbeitungsmittels zum Produkt erforderlich ist.

Unter "Bearbeitung" im weitesten Sinne ist dabei jede gezielt hervorgerufene Wechselwirkung zwischen dem Produkt und dem Bearbeitungsmittel zu verstehen, die dazu dient, eine Eigenschaft des Produkts zu erzeugen, zu verändern oder zu erfassen. Auch eine Kennzeichnung auf dem Produkt soll hier als Eigenschaft des Produkts verstanden werden, sodass das Auslesen einer bereits existierenden Kennzeichnung bzw. das Anbringen einer neuen Kennzeichnung auf dem Produkt einer Erfassung bzw. Erzeugung einer Produkteigenschaft entspricht. Die Inspektion des Produkts mit einer Kamera, beispielsweise um mittels Bildauswertung Erkenntnisse über bestimmte Produktmerkmale zu erhalten, soll dabei ebenso als Erfassung einer Produkteigenschaft verstanden werden wie beispielsweise eine Untersuchung des Produkts mittels Röntgenstrahlen, um dessen Durchstrahlungseigenschaften zu erfassen und beispielsweise Fremdkörper im Produkt zu entdecken, Schichtdicken zu bestimmen oder Füllmengen zu ermitteln oder Vollständigkeits- sowie Dichtheitsprüfungen auszuführen. Dagegen soll die bloße Existenz oder Ausrichtung eines Produkts an einer bestimmten Position der Förderebene, die beispielsweise mithilfe eines Sensors erfasst werden könnte, nicht als Eigenschaft im Sinne vorstehender Definition verstanden werden. So ist beispielweise bei einer Lichtschranke der Abstand zwischen Produkt und Sensor in der Regel unbedeutend. Auch ein beispielsweise induktiv oder kapazitiv arbeitender Sensor, der trotz bestimmter Abstandserfordernisse alleine der bloßen Erkennung eines Produkts dient, soll nicht als Mittel zur Erfassung einer Eigenschaft des Produkts verstanden werden.

Das einem bestimmten Bearbeitungsmittel zugeordnete Hilfsmittel dient dazu, die Bearbeitung des Produkts durch das Bearbeitungsmittel zu unterstützen oder überhaupt zu ermöglichen. Beispielsweise könnte als Hilfsmittel ein Führungselement infrage kommen, welches das Produkt während der Bearbeitung ausrichtet oder führt. Insbesondere könnte das Führungselement dazu dienen, das Produkt gegen eine Bewegung in Querrichtung Y zu stabilisieren, während es von dem Bearbeitungsmittel beispielsweise mit einer Kennzeichnung versehen wird. Dies kann das Anbringen eines Etiketts oder eines Aufdrucks auf dem Produkt sein, wobei dies bevorzugt auf der dem Führungselement abgewandten Seite des Produkts erfolgt. Das Führungselement stellt dabei sicher, dass das Produkt während der Kennzeichnung in einem vorgegebenen, vorzugsweise geringen Y-Abstand an dem Bearbeitungsmittel entlanggeführt wird, um eine qualitativ hochwertige Kennzeichnung auf dem Produkt anbringen zu können.

Denkbar sind Ausführungsformen, bei denen mehr als ein Bearbeitungsmittel vorgesehen ist. Beispielsweise könnte die Bearbeitungseinheit sowohl eine Druckeinheit als auch eine Kamera umfassen. Unabhängig davon ist es ferner denkbar, dass die Bearbeitungseinheit mehrere Hilfselemente umfasst, wobei die mehreren Hilfselemente jeweils unterschiedlichen oder auch nur einem Bearbeitungsmittel zugeordnet sein können. Beispielsweise könnte das zuvor beschriebene Führungselement dazu dienen, sowohl ein Produkt während eines Kennzeichnungsvorgangs als auch während einer anschließenden oder vorausgehenden Inspektion mit einer Kamera in Querrichtung Y zu führen, um beispielsweise sicherzustellen, dass das Produkt den Fokussierbereich der Kamera während der Bearbeitung durch diese nicht verlässt.

Alternativ könnte ein erstes Hilfselement lediglich die Führung des Produkts während eines Kennzeichnungsvorgangs übernehmen, während ein als Lichtschutz oder Beleuchtung ausgebildetes zweites Hilfselement eine Bilderfassung durch eine Kamera unterstützt oder optimiert. Die beiden Hilfselemente wären dann jeweils unterschiedlichen Bearbeitungsmitteln zugeordnet.

Erfindungsgemäß erstreckt sich das wenigstens eine Bearbeitungsmittel und das wenigstens eine ihm zugeordnete Hilfsmittel jeweils zumindest teilweise oberhalb der Förderebene, wodurch die Bearbeitung des Produkts ermöglicht oder erleichtert wird. Nach einer bevorzugten Ausführungsform erstreckt sich das wenigstens eine Bearbeitungsmittel wenigstens teilweise so unterhalb der Fördereinheit oder der Förderebene, dass die Fördereinheit eine freie Verschiebung des Bearbeitungsmittels in Querrichtung Y, insbesondere in Richtung auf ein auf der Förderebene angeordnetes Produkt P, blockiert.

Erfindungsgemäß ist das wenigstens eine Bearbeitungsmittel und das ihm für die Bearbeitung des Produkts zugeordnete wenigstens eine Hilfselement auf zwei in Querrichtung Y einander gegenüberliegenden Seiten des Produkts an der Bearbeitungseinheit fixiert. Das Bearbeitungsmittel und das zugeordnete Hilfselement nehmen daher bei der Bearbeitung das Produkt zwischen sich auf, wobei das Bearbeitungsmittel auf der einen Seite und das zugeordnete Hilfselement auf der gegenüberliegenden anderen Seite des Produkts miteinander zusammenwirken, um die Bearbeitung ordnungsgemäß durchzuführen.

Kern der Erfindung ist es, das Bearbeitungsmittel und das ihm zugeordnete Hilfselement gemeinsam mit der Fördereinheit relativ zum ortsfesten Grundkörper in Querrichtung Y verfahrbar auszubilden. Die Relativbewegung dient erfindungsgemäß dazu, ein der Bearbeitungseinheit zuzuführendes Produkt an einer vorgebbaren Y-Position der Förderebene aufzunehmen, um es anschließend zwischen dem Hilfselement und dem Bearbeitungsmittel hindurch fördern und bearbeiten zu können.

Die gemeinsame Verfahrbarkeit von Bearbeitungsmittel, Hilfsmittel und Fördereinheit erlaubt vorteilhaft eine besonders flexible Anpassung an unterschiedliche Produktgrößen und Zuführpositionen der Produkte in Bezug auf die Querrichtung Y. So ist die Bearbeitungseinheit in der Lage, ihr zuzuführende Produkte an einer wählbaren Y-Position entgegenzunehmen bzw. auf der Förderebene der Fördereinheit aufzunehmen, wie auch anhand der Figurenbeispiele deutlich werden wird. Die Position des Bearbeitungsmittels relativ zur Fördereinheit muss dazu nicht verändert (d.h. nicht neu justiert) werden. Auch das Hilfsmittel behält seine Position relativ zur Fördereinheit bzw. zum Bearbeitungsmittel bei, während alle drei Einheiten gemeinsam, quasi starr zueinander, in Querrichtung Y verschiebbar sind, um sie für die Aufnahme des der Fördereinheit zuzuführenden Produkts an die dafür erforderliche Y- Position zu verschieben.

Die gemeinsame Verschiebung schließt jedoch nicht aus, dass die Bearbeitungseinheit zuvor auf die Bearbeitung eines bestimmten Produkttyps vorbereitet wird, der zum Beispiel als Charge bzw. in einer größeren Stückzahl bearbeitet werden soll. Dann kann es erforderlich sein, das Hilfsmittel und/oder das Bearbeitungsmittel zunächst zu justieren und dazu relativ zur Fördereinheit in Querrichtung Y zu positionieren und zu fixieren. Beispielsweise könnte ein Führungselement als Hilfsmittel und/oder eine Druckeinheit als Bearbeitungsmittel vor Beginn eines Bearbeitungsdurchlaufs durch jeweilige Querverschiebung und anschließende Fixierung zunächst auf die Breite der zu bedruckenden Produkte eingestellt werden. In Kenntnis der Querposition, in welcher die Produkte an die Fördereinheit herangeführt werden (Übernahmeposition), kann die Bearbeitungseinheit dann relativ zum Grundkörper so in Querrichtung Y verfahren werden, dass die übernommenen Produkte mit einer zu bedruckenden Seite genau am Druckkopf der Druckeinheit vorbeigeführt werden, während die Produkte auf der gegenüberliegenden Seite mithilfe des zuvor positionierten und fixierten Führungselements geführt und stabilisiert werden. Für alle weiteren zugeführten Produkte desselben Produkttyps ist weder eine erneute Querverschiebung der gesamten Bearbeitungseinheit, noch eine erneute Einstellung der Relativpositionen von Bearbeitungsmittel, Hilfsmittel und Fördereinheit zueinander erforderlich.

Nach einer vorteilhaften Ausführungsform der Erfindung umfasst die Bearbeitungsstation eine stromaufwärts der Bearbeitungseinheit angeordnete Zuführeinheit, die dafür ausgebildet ist, die Produkte der Fördereinheit zuzuführen. Die Zuführeinheit kann ein Transportband oder ein vergleichbares Fördermittel aufweisen, auf welchem die Produkte in Förderrichtung X zur Fördereinheit hin gefördert und an diese übergeben werden. Die erfindungsgemäße Verschiebbarkeit der Bearbeitungseinheit relativ zur Zuführeinheit macht es möglich, das Produkt in gerader Linie bzw. Spur in Förderrichtung X von der Zuführeinheit an einer wählbaren Y-Position an die Fördereinheit zu übergeben, ohne dass ein Umspuren oder Querverschieben des Produkts als solches auf der Zuführeinheit oder der Fördereinheit für die anschließende Bearbeitung nötig wäre.

Anders als die Bearbeitungseinheit kann die Zuführeinheit ortsfest und beispielsweise mit dem Grundkörper der Bearbeitungsstation verbunden sein. Eine Querverschiebung der Zuführeinheit in Y-Richtung ist zur Verwirklichung des der Erfindung zugrundeliegenden Prinzips auch weder nötig noch nutzbar, da eine kinematische Umkehr der erfindungsgemäßen Vorrichtung (also mit ortsfester Bearbeitungseinheit und querverschieblicher Zuführeinheit) die Aufgabe der Erfindung nicht lösen kann. Denn dann müsste die Zuführeinheit jedes einzelne auf ihr geförderte Produkt durch individuelle Querverschiebung für die stromabwärts angeordnete Bearbeitungseinheit neu positionieren, was die Förderkapazität der Zuführeinheit stark einschränkt und permanente Verfahrbewegungen erfordern würde.

Stattdessen ist die Bearbeitungseinheit relativ zur Zuführeinheit in Querrichtung Y so verfahrbar, dass ein von der Zuführeinheit kommendes Produkt von dieser an einer wählbaren Y-Position an die Fördereinheit bzw. auf die von ihr gebildete Förderebene übergeben wird.

Nach einer vorteilhaften Ausführungsform der Erfindung wird die Bearbeitungseinheit von einer Führung, insbesondere einer Linearführung, getragen, die ihrerseits mit dem Grundkörper verbunden ist. Beispielsweise kann die Führung einen unteren, mit dem Grundkörper verbundenen Abschnitt und einen relativ dazu in Querrichtung Y verfahrbaren oberen Abschnitt als Schlitten aufweisen, der mit der Bearbeitungseinheit verbundenen ist. Die Führung kann manuell betätigt werden, indem beispielsweise ein Bediener den Schlitten vor Beginn eines Bearbeitungsdurchlaufs geeignet in Querrichtung verfährt und in dieser Position fixiert. Alternativ könnte die Führung auch einen Antrieb aufweisen und automatisch betrieben werden, beispielsweise mithilfe einer Steuerung, welche in Abhängigkeit der zu bearbeitenden Produkte und ihrer Bearbeitung die dafür anzufahrende Querposition selbsttätig einstellt.

Das Bearbeitungsmittel kann beispielsweise als Druckeinheit ausgebildet sein. Die Druckeinheit kann beispielsweise dazu ausgebildet sein, ein Produkt auf einer von der Förderebene aufragenden Seitenfläche mit einer Kennzeichnung zu bedrucken. Denkbar ist ferner, dass die Kennzeichnung nur knapp oberhalb der Förderebene aufzubringen ist, sodass der Druckkopf ebenfalls nur knapp oberhalb der Förderebene angeordnet ist. Dazu kann es erforderlich sein, die Druckeinheit am Rand der Förderebene anzuordnen, damit sich Teile der Druckeinheit auch unterhalb der Förderebene erstrecken können. In diesem Fall könnte die Bearbeitungseinheit relativ zu einer stromaufwärts angeordneten Zuführeinheit in Querrichtung Y so positioniert werden, dass die Produkte von der Zuführeinheit genau am Rand der Förderebene bzw. am Rand des Transportbands der Fördereinheit auf diese übergehen. Ein als Führungselement ausgebildetes Hilfselement würde dazu entsprechend der Produktbreite so an der Bearbeitungseinheit eingestellt und fixiert werden, dass das Produkt am Rand des Förderbandes liegend und möglichst nahe und verdrehsicher am Druckkopf und am Führungselement vorbei bzw. zwischen Druckkopf und Führungselement hindurch gefördert wird. Wie jede andere Bearbeitung kann auch das Anbringen einer Kennzeichnung oder das Aufbringen eines Drucks, beispielsweise eines Tintenstrahldrucks, erfolgen, während das Produkt von der Fördereinheit gefördert wird oder auch während eines vorübergehenden Bandstillstands.

Das Bearbeitungsmittel kann auch als Inspektionseinheit ausgebildet sein. Dazu sollen auch Mittel gehören, die eine am Produkt angebrachte Kennzeichnung oder bestimmte Gestaltungsmerkmale oder Produktabmessungen erfassen. Dazu gehören beispielsweise Kameras, RFID-Sensoren oder Barcode- bzw. QR-Code-Scanner. Auch ein Röntgengerät zur Erfassung bestimmter Produkt- oder Durchstrahlungseigenschaften, z. B. zur Ermittlung von Inhomogenitäten oder Fremdkörpern im Produkt, zur Füllhöhenmessung oder optischen Durchlichtinspektion wie Siegelnahtprüfung soll dabei zur Gruppe der Inspektionseinheiten zählen. Das Betriebsmittel im Falle einer Röntgeninspektion wäre dann beispielsweise ein Szintillator oder ein sonstiger Röntgenstrahlen erfassender Sensor bzw. Detektor, während als zugehöriges Hilfsmittel eine Röntgenstrahlenquelle infrage käme. Die beiden Komponenten könnten einander dann in Querrichtung Y gegenüber liegen und ein dazwischen hindurch gefördertes Produkt inspizieren ("side view").

Als Bearbeitungsmittel kommt auch ein Auswerfer infrage, der einzelne Produkte gezielt aus dem Förderstrom ausschleusen kann. Dabei kann es sich insbesondere um ein oberhalb der Förderebene verschwenkbares oder verschiebbares Ausleitelement handeln, welches ein Produkt seitlich, insbesondere stoßartig, mit einer Kraft beaufschlagt, um es von der Förderebene herunterzubewegen. Als zugehöriges Hilfselement könnte ein Leitelement vorgesehen sein, welches die vom Lenkelement beaufschlagten Produkte gezielt von der Förderebene herunterlenkt, beispielsweise in einen neben der Fördereinheit angeordneten Behälter.

Eine vorteilhafte Ausführungsform der Erfindung sieht vor, dass das Hilfselement als Führungselement ausgebildet ist, um ein auf der Förderebene gefördertes Produkt seitlich (in Querrichtung Y) zu führen. Dazu weist das Führungselement eine Führungsfläche auf, an der das Produkt entlanggleiten oder im Falle eines vorübergehenden Bandstillstands anliegen kann. Die Führungsfläche kann auch dazu dienen, ein Verdrehen oder Verschieben des Produkts auf der Förderebene zu unterbinden. Vorzugsweise erstreckt sich die Führungsfläche in Förderrichtung X. Weiterhin vorzugsweise ist die Führungsfläche eben. Höchst vorzugsweise erstreckt sich die Führungsfläche in einer X-Z-Ebene. Ein Führungselement kann für unterschiedliche Bearbeitungsmittel hilfreich sein, die während der Bearbeitung eine Führung des Produkts erfordern. Dazu gehört das Anbringen von Kennzeichnungen, insbesondere auf einer der Führungsfläche gegenüberliegenden Produktseite und besonders dann, wenn durch die Bearbeitung (z. B. beim Etikettieren) eine Kraft in Querrichtung Y auf das Produkt ausgeübt wird, welche vom Führungselement aufgenommen und kompensiert wird. Das Führungselement kann auch verhindern, dass ein mit Bilderkennungsmitteln zu inspizierendes Produkt seine Position während der Bearbeitung in Querrichtung Y verändert, um eine korrekte Erfassung der Bilddaten zu ermöglichen und das Produkt beispielsweise im Fokussierbereich einer Kamera hält.

Alternativ oder ergänzend kann das Hilfselement auch als Lichtschutz, als Hintergrundbeleuchtung, als Schutz vor elektromagnetischer Strahlung, als Windschutz, als Reflexionsmittel, als Beleuchtungsmittel oder als eine andere Komponente ausgebildet sein, die unmittelbar dem jeweiligen Bearbeitungsmittel zugeordnet ist und speziell dafür vorgesehen ist, die Bearbeitung des Produkts mit den jeweiligen Bearbeitungsmittel zu ermöglichen oder zu erleichtern.

Denkbar ist nach einer weiteren Ausführungsform der Erfindung ferner, dass ein Hilfsmittel als weiteres Bearbeitungsmittel ausgebildet ist. So könnten beispielsweise zwei einander gegenüberliegende Kameras ein Produkt von zwei Seiten erfassen, oder ein Produkt wird auf einer Seite bedruckt, während auf der gegenüberliegenden Seite eine Kamera zur Bilderfassung mit dem Produkt zusammenwirkt. Denkbar ist auch das Anbringen zweier Kennzeichnungen, beispielsweise auf zwei gegenüberliegenden Produktseiten, mit zwei Druckeinheiten, wobei jeweils ein für eine Druckeinheit als Führungselement dienendes Hilfsmittel zugleich Teil der gegenüberliegenden Druckeinheit ist. Denkbar ist auch die Verwendung von zwei Kameras auf einander in Querrichtung Y gegenüberliegenden Seiten, wobei ein der ersten Kamera als Hilfselement dienendes Führungselement zugleich die zweite Kamera tragen könnte. Die zweite Kamera könnte auch Merkmale auf der der Förderebene abgewandten Oberseite des Produkts erfassen.

Vorzugsweise ist das wenigstens eine Bearbeitungsmittel und/oder das wenigstens eine Hilfsmittel in Querrichtung Y und/oder in Höhenrichtung Z manuell oder automatisch einstellbar und fixierbar. Dadurch lässt sich die Bearbeitungseinheit auf Produkte mit unterschiedlichen Abmessungen und auf unterschiedliche Bearbeitungserfordernisse einstellen. Beispielsweise kann die Höhenposition einer auf dem Produkt anzubringenden Kennzeichnung durch Fixierung eines als Drucker ausgebildeten Bearbeitungsmittels in einer dazu erforderlichen Höhe eingestellt werden

Die erfindungsgemäße Bearbeitungsstation als solche ist ortsfest und verfügt beispielsweise über ein gemeinsames Gestell als Grundkörper, an welchem die Bearbeitungseinheit verfahrbar und eine Zuführeinheit ortsfest befestigt sein kann. Die relativ zum Grundkörper in Querrichtung Y verfahrbare Bearbeitungseinheit beschränkt sich dabei bevorzugt bestmöglich auf diejenigen Komponenten (wenigstens ein Bearbeitungsmittel, eine Fördereinheit und wenigstens ein Hilfsmittel), die zur Verwirklichung des der Erfindung zugrunde liegenden Prinzips der Querverschiebung erforderlich sind. Weitere maschinentypische Komponenten wie etwa ein die Bearbeitungsstation insgesamt oder in Teilen schützendes Gehäuse, ein zugehöriger Schaltschrank, eine Steuereinheit, ein Bedienterminal oder eine Anzeigeeinheit kann demgegenüber bevorzugt ortsfest und mit dem Grundkörper verbunden sein, da es einer Querverschiebung dieser Komponenten für die Verwirklichung des Erfindungsgedankens nicht unmittelbar bedarf und dadurch geringere Massen zu verschieben sind.

Die Fördereinheit der Bearbeitungseinheit kann die Voraussetzungen zur Umsetzung der Erfindung erfüllen, sofern sie in der Lage ist, ein zu bearbeitendes Produkt zwischen dem Bearbeitungsmittel und dem Hilfsmittel hindurch zu fördern. Bevorzugt handelt es sich dabei um ein Transportband mit einer unterbrechungsfreien Bandoberfläche. Alternativ und in Abhängigkeit der zu fördernden Produkte kommen jedoch auch andere Fördervorrichtungen oder -prinzipien infrage. So könnte beispielsweise auch ein Riemenförderer mit mehreren parallel verlaufenden Riemen, eine Rollenbahn oder ein Kettenförderer genutzt werden, solange der ordnungsgemäße Transport der Produkte und die Querverschieblichkeit der Bearbeitungseinheit durch das Förderprinzip die Umsetzung der Erfindung nicht nachteilig beeinträchtigt. Auch eine Zuführeinheit kann durch unterschiedliche, dem Fachmann bekannte Transportvorrichtungen verwirklicht werden, solange sie die Produkte an die Fördereinheit übergeben kann.

Eine erfindungsgemäße Bearbeitungsstation kann eine oberhalb der Förderebene angeordnete zusätzliche Förderkomponente umfassen, welche die Förderung des Produkts unterstützt. So könnte oberhalb der Fördereinheit eine weitere Fördereinheit angeordnet sein, sodass das Produkt von der oberen und der unteren Fördereinheit geklemmt transportiert werden kann. Auch die obere Fördereinheit, die auch als Oberläufer bezeichnet werden kann, ist dann ein Teil der Bearbeitungseinheit und gemeinsam mit der unteren Fördereinheit, dem Bearbeitungsmittel und dem Hilfsmittel in Querrichtung Y verschiebbar. Darüber hinaus kann der Oberläufer seinerseits relativ zur Bearbeitungseinheit und/oder zum Grundkörper querverschieblich und fixierbar sein, um ihn für bestimmte Produkttypen auszurichten. Zudem kann der Oberläufer weitere Bearbeitungsmittel tragen, beispielweise einen bevorzugt für die Produktoberseite gedachten Drucker, eine Kamera etc. Sofern der Oberläufer oder daran angebrachte Mittel eine Bearbeitung durch ein anderes Bearbeitungsmittel unterstützt, kann er im weitesten Sinne auch als Hilfsmittel verstanden werden.

Ein erfindungsgemäßes Verfahren nutzt eine vorstehend beschriebene Bearbeitungsstation nebst Zuführeinheit und umfasst folgende Schritte:
10) Positionierung der Bearbeitungseinheit in Querrichtung relativ zur Zuführeinheit in Abhängigkeit derjenigen Position, in welcher das Produkt auf der Zuführeinheit im Moment der Übergabe an die Fördereinheit bereitgestellt werden soll,
20) Förderung wenigstens eines Produkts mittels Zuführeinheit und automatische Übergabe des Produkts an die Fördereinheit der Bearbeitungseinheit mit anschließender Förderung des Produkts in Förderrichtung X und Bearbeitung des Produkts durch das Bearbeitungsmittel und dem diesem zugeordneten Hilfsmittel.

Nach Durchführung des Verfahrensschrittes 10) kann der Verfahrensschritt 20) für jedes nachfolgende Produkt gleichen Typs bzw. gleicher Bearbeitung unmittelbar wiederholt werden, ohne dass jedes Mal eine erneute Einstellung oder Querverschiebung nach Verfahrensschritt 10) fällig wäre. Dabei wird davon ausgegangen, dass jedes Produkt von der Zuführeinheit an stets der gleichen Querposition transportiert wird, um die Förderebene an derjenigen Übergabeposition zu erreichen, die Grundlage für die Einstellung gemäß Verfahrensschritt b) war.

In Vorbereitung der Produktbearbeitung kann es nach einer Ausführungsform des Verfahrens zweckmäßig sein, folgenden Schritt dem Verfahrensschritt 10) voranzustellen:
05) Positionierung des wenigstens einen Bearbeitungsmittels und des ihm zugeordneten Hilfsmittels in Querrichtung Y relativ zur Fördereinheit in Abhängigkeit eines zu fördernden Produkts, insbesondere Einstellung eines Abstands in Querrichtung Y zwischen dem wenigstens einen Bearbeitungsmittel und dem ihm zugeordneten Hilfsmittel.

Hierdurch wird sichergestellt, dass der Abstand des Bearbeitungsmittels und/oder des Hilfsmittels zum Produkt und/oder zueinander auf die anschließende Bearbeitung eingestellt ist. Die einmalige Ausführung dieses Schrittes kann für einen Batch gleichartiger Produkte genügen, und er könnte je nach Bereitstellung der Produkte auch mit Verfahrensschritt 10) vertauscht werden.

Eine bevorzugte Ausführungsform des Verfahrens ist gerichtet auf die Verwendung eines Führungselements als Hilfselement, dessen Führungsfläche sich im Wesentlichen in Förderrichtung X erstreckt. Dabei werden die Verfahrensschritte 05 und/oder 10) mit der Maßgabe durchgeführt, dass
i) ein Abschnitt einer ersten Außenfläche des Produkts, wenn es von der Zuführeinheit auf die Förderebene übergeben wird, mit der Führungsfläche fluchtet, sodass das Produkt nach der Übergabe an die Bearbeitungseinheit von dem Führungselement seitlich geführt wird,
   und/oder
ii) ein Abschnitt einer zweiten Außenfläche des Produkts nach der Übergabe an die Bearbeitungseinheit auf der Förderebene eine vorgebbare, für die Bearbeitung mit dem Bearbeitungsmittel erforderliche Y-Position einnimmt.

Beispielsweise kann für das seitliche Bedrucken eines Produkts mit Unterstützung eines Führungselements zunächst ein Abstand Y_{DH} zwischen der Führungsfläche des Führungselements und dem Bearbeitungsmittel (beispielsweise einem Druckkopf) eingestellt werden, der im Wesentlichen der Breite des zu bearbeitenden Produkts in Querrichtung Y entspricht, um eine genaue und enge Führung einer ersten Seite des Produkts entlang des Druckkopfes zu gewährleisten. Die Einstellung kann beispielsweise vorgenommen werden, indem das Führungselement in Querrichtung Y auf den genannten Abstand zum Druckkopf verschoben und in dieser Position an der Bearbeitungseinheit fixiert wird. Der Druckkopf muss dann nicht ebenfalls verschoben werden und könnte beispielsweise sogar dauerhaft fest an der Bearbeitungseinheit fixiert sein. Das Bearbeitungsmittel "Druckkopf", die Fördereinheit und das Hilfsmittel "Führungselement" sind in dieser relativ zueinander starren Anordnung als Teile der Bearbeitungseinheit gemeinsam in Querrichtung Y und relativ zum Grundkörper verschiebbar.

Die Bearbeitungseinheit kann dann relativ zur Zuführeinheit so positioniert werden, dass das von der Zuführeinheit zu übernehmende Produkt mit einer der ersten Seite in Querrichtung Y gegenüberliegenden zweiten Seite bei der Weiterförderung eng am Druckkopf vorbeigeführt wird, um ein qualitativ hochwertiges Druckbild auf dieser zweiten Seite erzeugen zu können. In diesem speziellen Anwendungsfall (Bedrucken) wird die Bearbeitungsstation durch die Verfahrensschritte i) und ii) also auf die Produktbreite und die Zuführposition des Produkts genau eingestellt. Auch bei der Inspektion des Produkts, beispielsweise mittels einer Kamera, ermöglicht die Verschiebung der Bearbeitungseinheit die Übernahme der Produkte auf die Förderebene genau an der Y-Position, an der die Produkte bei Weiterförderung mittels der Fördereinheit durch den Fokussierbereich der Kamera geführt werden.

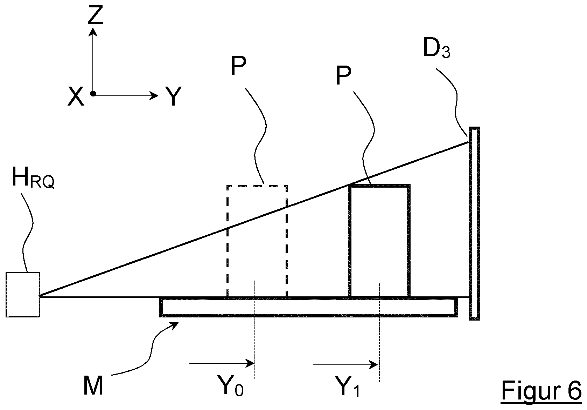

Im Falle einer Röntgeninspektion soll das Produkt bevorzugt so platziert werden, dass alle von der Röntgenquelle ausgehenden Strahlen auf das Produkt gerichtet sind und dieses über seine gesamte vertikale Ausdehnung durchstrahlen. Außerdem sind Röntgenquelle und Röntgendetektor vorzugsweise so relativ zueinander zu positionieren, dass die das Produkt durchlaufenden Strahlen, die in der Regel fächerförmig von der Röntgenquelle ausgehen, die Größe des hinter dem Produkt angeordneten Röntgendetektors bestmöglich ausnutzen. Figur 6 macht dies anschaulich.

In den vorgenannten und bezüglich der Positionierungserfordernisse vergleichbaren Bearbeitungsfällen kann das Produkt dann in gerader Spur von der Zuführeinheit auf die Fördereinheit übergeben und dort bearbeitet werden.

Nachfolgend soll eine Ausführungsform der Erfindung anhand von Figurenbeispielen näher erläutert werden. Dabei zeigt
- Figur 1: eine perspektivische Ansicht einer ersten Ausführungsform der Erfindung,
- Figur 2: die Ausführungsform gemäß Figur 2 nach Querverschiebung der Bearbeitungseinheit,
- Figur 3: eine vereinfachte Draufsicht auf die Vorrichtung gemäß Figur 1,
- Figur 4: eine vereinfachte Draufsicht auf die Vorrichtung gemäß Figur 2,
- Figur 5: eine perspektivische Ansicht einer zweiten Ausführungsform der Erfindung, und
- Figur 6: eine schematische Darstellung der Röntgendurchstrahlung eines Produkts.

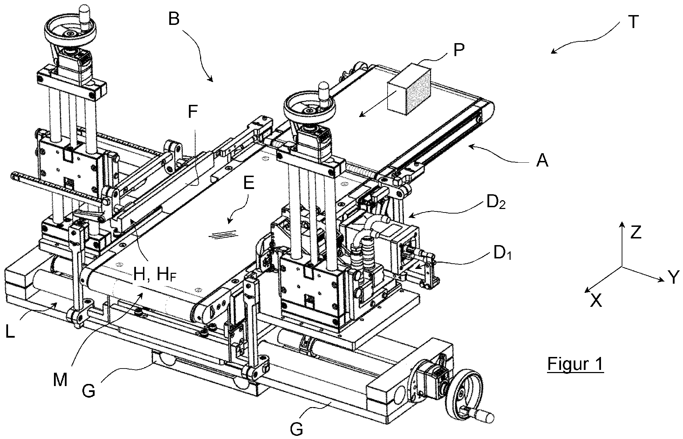

Figur 1 zeigt in vereinfachter perspektivischer Darstellung eine erfindungsgemäße Bearbeitungsstation T, die sich in einer horizontalen Förderrichtung X, einer dazu orthogonalen, horizontalen Querrichtung Y und einer zu beiden Richtungen orthogonalen Höhenrichtung Z erstreckt.

Die Bearbeitungsstation T ist auf einem nur teilweise gezeigten und als Gestell ausgebildeten ortsfesten Grundkörper G angeordnet, der beispielsweise auf einem Boden einer Fertigungshalle befestigt sein kann.

Der Grundkörper trägt eine ortsfest mit ihm verbundene Zuführeinheit A, mit deren Hilfe Produkte P in Förderrichtung X gefördert werden. Unmittelbar stromabwärts der Zuführeinheit A ist eine Bearbeitungseinheit B angeordnet. Die Bearbeitungseinheit B umfasst eine Fördereinheit M, die ebenfalls zum Transport von Produkten P in Förderrichtung X ausgebildet ist und dazu die Produkte P von der stromaufwärts angeordneten Zuführeinheit A übernimmt. Die Zuführeinheit A und die Fördereinheit M sind jeweils mit einem umlaufenden Förderband ausgestattet. Die Oberseite der jeweiligen Förderbänder liegen fluchtend auf der gleichen Höhe, und das Förderband der Fördereinheit M definiert auf seiner Oberseite eine Förderebene E.

Die Bearbeitungseinheit B umfasst ein als Druckeinheit ausgeführtes erstes Bearbeitungsmittel D₁, welches einen nicht näher bezeichneten Druckkopf umfasst, der in Querrichtung Y eng an die Förderebene E anschließt. Die Druckeinheit erstreckt sich sowohl oberhalb als auch unterhalb der Förderebene E. Darüber hinaus umfasst die Bearbeitungseinheit ein als Kamera ausgeführtes zweites Bearbeitungsmittel D₂, welches in engem Abstand zum ersten Bearbeitungsmittel D₁ und unmittelbar stromaufwärts davon angeordnet ist. Auch die Kamera schließt seitlich eng an die Förderebene E an und erstreckt sich ebenfalls sowohl oberhalb als auch unterhalb. Unabhängig von der in diesen Figuren dargestellten Lösung ist auch denkbar, eine Kamera stromabwärts eines anderen Bearbeitungsmittels anzuordnen, etwa um die Qualität eines soeben stromaufwärts aufgebrachten Druckbilds zu überprüfen.

Auf der in Querrichtung Y gesehen gegenüberliegenden Seite der Fördereinheit M ist ein als Führungselement H_{F} ausgebildetes Hilfsmittel vorgesehen mit einer Führungsfläche F, die sich im Wesentlichen in einer X-Z-Ebene erstreckt. Das Element dient dazu, ein Produkt P in Querrichtung Y zu führen bzw. zu stabilisieren, während es von der Kamera D₂ erfasst und von der Druckeinheit D₁ bedruckt wird. Das Führungselement H_{F} ist damit sowohl der Kamera D₂ als auch der Druckeinheit D₁ zugeordnet, um beide Bearbeitungsmittel während der jeweiligen Bearbeitung zu unterstützen.

Die Position des Führungselements H_{F} ist außerdem in Querrichtung Y relativ zur Fördereinheit M bzw. zu den Bearbeitungsmitteln D₁ und D₂ frei einstellbar und fixierbar mittels zweier nicht näher identifizierter Klemmschienen. Das Führungselement kann dazu auch so weit in Richtung auf die Druckeinheit bzw. die Kamera verschoben werden, dass es nicht seitlich, sondern oberhalb der Förderebene E positioniert ist.

Die Bearbeitungseinheit B, welche die Bearbeitungsmittel D₁, D₂, die Fördereinheit M und das Führungselement H_{F} umfasst, ist mit einer über ein Handrad manuell zu betätigenden Linearführung L derart verbunden, dass die Bearbeitungseinheit B in Querrichtung Y relativ zum Grundkörper G und damit auch relativ zur Zuführeinheit A frei verschieblich ist. Die Bearbeitungseinheit B kann optional mithilfe nicht näher dargestellter Fixiermittel in jeder gewählten Verschiebeposition entlang der Linearführung L fixierbar sein, um ein ungewolltes Verschieben zu unterbinden. Alternativ kann beispielsweise eine Gewindespindel der Linearführung durch ausreichende Reibung oder Selbsthemmung die nötige Fixierung bewirken.

In Figur 1 ist zu sehen, wie ein Produkt P etwa mittig auf der Zuführeinheit A angeordnet und in dieser Querposition der Fördereinheit M zugeführt wird. Diese Position ist zumindest für die Bearbeitung mit der Druckeinheit D₁ ungünstig, da der Druckkopf nicht bis an die der Druckeinheit zugewandten Seitenflächen des Produkts heranreichen wird, wenn das Produkt auf der Förderebene E gefördert wird. Ein Bedrucken ist so nicht möglich.

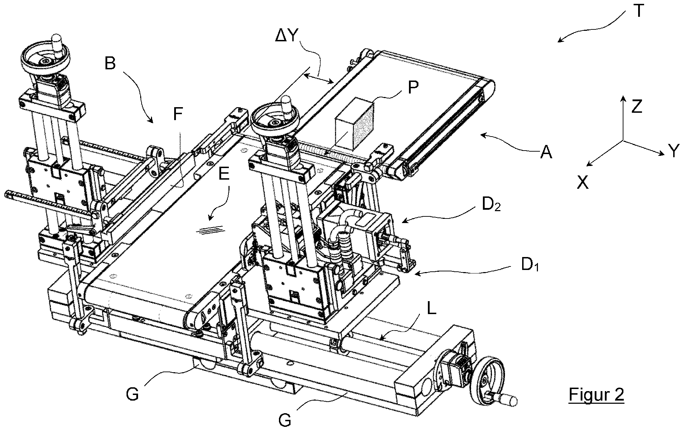

Wie in Figur 2 zu sehen ist, ermöglicht die erfindungsgemäße Verfahrbarkeit der Bearbeitungseinheit B relativ zum Grundkörper G bzw. zur Zuführeinheit A jedoch die Übernahme des Produkts P in einer für den Druckvorgang vorteilhaften, geänderten Querposition. Dazu wurde die Bearbeitungseinheit B mittels der Linearführung L in Querrichtung Y so pweit um einen Versatz ΔY verschoben, dass das Produkt P die Fördereinheit M am Rand des Förderbandes bzw. der Förderebene E erreicht und auf diese so übergeben werden kann. Dann erreicht die zu bedruckende Produktseite den Druckkopf in engem, zum Bedrucken benötigten Abstand.

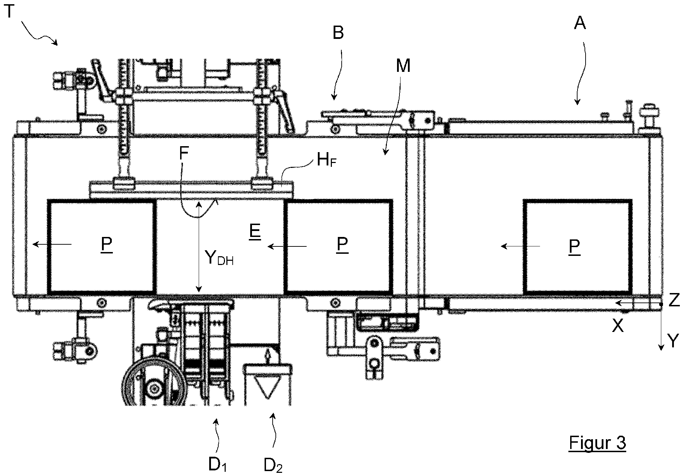

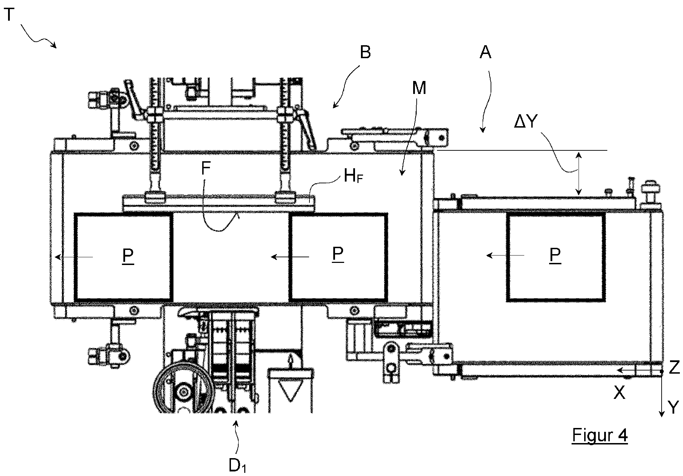

Figuren 3 und 4 verdeutlichen das erfindungsgemäße Prinzip in vereinfachter schematischer Draufsicht auf die Förderebene E. Dabei zeigt Figur 3 den Fall, in dem ein Produkt P von der Zuführeinheit A bereits in der richtigen Querposition, nämlich am in Förderrichtung gesehen linken Rand der Zuführeinheit A, an die Fördereinheit übergeben werden kann, um das Produkt mit der Druckeinheit D₁ bedrucken zu können. Ein Querverschieben der Bearbeitungseinheit B relativ zum Grundkörper G bzw. zur Zuführeinheit A ist somit nicht erforderlich.

In Figur 3 ist weiterhin zu sehen, dass das Führungselement H_{F} mit seiner Führungsfläche F so in Querrichtung Y vorpositioniert und fixiert wurde, dass die Produkte P bei ihrer Weiterförderung und Bearbeitung seitlich geführt und mit geringem Spiel am Drucckopf der Druckeinheit D₁ vorbei geleitet werden.

Die als weiteres Bearbeitungsmittel D₂ vorgesehene Kamera wurde über nicht näher dargestellte Positioniermittel in Querrichtung Y so ausgerichtet und fixiert, dass das Produkt P bzw. ein von der Kamera zu erfassender Abschnitt des Produkts im Fokussierbereich der Kamera liegt.

Figur 4 dagegen zeigt den Fall, dass das Produkt P am in Förderrichtung gesehen rechten Rand der Zuführeinheit A an die Bearbeitungseinheit B herangeführt wird. Um die Produkte dennoch in der in Figur 3 gezeigten Querposition auf die Fördereinheit M überführen und dort bearbeiten zu können, wurde die Bearbeitungseinheit B erfindungsgemäß relativ zum Grundkörper G bzw. zur Zuführeinheit A um den Versatz ΔY verschoben, sodass das Produkt P nun in gerader Spur an die Fördereinheit übergeben und dort mit vorgegebenem bzw. hierfür notwendigem Abstand bearbeitet werden kann.

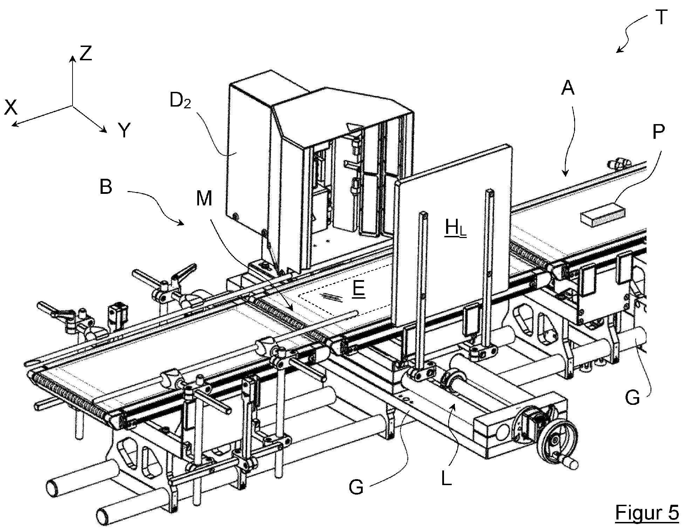

Figur 5 zeigt eine alternative Ausführungsform der Erfindung in vereinfachter Darstellung, wobei wiederkehrende Bezugszeichen den jeweiligen vorstehenden Erläuterungen entsprechen. Zu sehen ist eine Bearbeitungsvorrichtung T mit einer Zuführeinheit A, einer stromabwärts davon angeordneten Bearbeitungseinheit B und einem wiederum stromabwärts dazu angeordneten, nicht näher bezeichneten Abführband. Anders als die Zuführeinheit A und das Abführband ist die Bearbeitungseinheit B wieder in Querrichtung Y relativ zum Grundkörper G verschieblich. Eine als Kamera ausgebildete Inspektionsvorrichtung D₂ ist seitlich neben und knapp oberhalb der Förderebene E angeordnet und dient hier als Bearbeitungsmittel, um die der Förderebene E zugeführten Produkte P mit Bilderkennungsmitteln zu erfassen. In Querrichtung Y auf der anderen Seite der Förderebene E der Kamera gegenüberliegend ist ein mit der Kamera zusammenwirkendes Hilfsmittel in Form eines Lichtschutzes H_{L} angeordnet. Dieser blockiert die Ausbreitung des von einer für die Kamera benötigte Beleuchtung ausgesandten Lichts in die Umgebung zumindest teilweise, da es sich in der Regel um den Bediener störendes Blitzlicht handelt.

Die Kamera D₂, die Fördereinheit M und der Lichtschutz H_{L} sind als gemeinsamer Teil der Bearbeitungseinheit B in Querrichtung Y erfindungsgemäß so verfahrbar, dass die von der Zuführeinheit A zugeführten Produkte P im Fokussierbereich der Kamera liegen.

Figur 6 zeigt mit Blick entlang der Förderrichtung X in vereinfachter Darstellung ein Produkt P während einer Röntgeninspektion. Dazu richtet ein als Röntgenquelle ausgebildetes Hilfsmittel H_{RQ} fächerartig Röntgenstrahlen in Querrichtung Y auf ein als Röntgendetektor D₃ ausgebildetes Bearbeitungsmittel. Die Röntgenstrahlen durchdringen dabei das auf der Fördereinheit M transportierte Produkt P in einer Y-Z-Ebene und erreichen den Röntgendetektor D₃, je nach Durchstrahlungseigenschaften des Produkts entlang des jeweiligen Röntgenstrahls mehr oder weniger intensiv. Zur vollständigen Durchstrahlung des gesamten Produkts wurde die Bearbeitungseinheit mit der Fördereinheit M so in Querrichtung Y verfahren, dass das Produkt anstatt an einer dafür nachteiligen Querposition Yo an der für die optimale Durchstrahlung geeigneten Position Y₁ gefördert wird. Zur optimalen Ausnutzung der Größe des Detektors D₃ wurde dessen Y-Abstand zur Röntgenquelle H_{RQ} zuvor justiert. So wird das Produkt vollständig durchstrahlt und die Röntgenstrahlen erreichen den Detektor D₃ über dessen gesamten verfügbaren vertikalen Erfassungsbereich.

### Bezugszeichenliste

- A: Zuführeinheit
- B: Bearbeitungseinheit
- D, D*: Bearbeitungsmittel
- D₁: Druckeinheit
- D₂: Kamera
- D₃: Röntgendetektor
- E: Förderebene
- F: Führungsfläche
- G: Grundkörper
- H: Hilfselement
- H_{RQ}: Röntgenquelle
- H_{F}: Führungselement
- H_{L}: Lichtschutz
- L: Linearführung
- M: Fördereinheit
- P: Produkt
- T: Bearbeitungsstation
- X: Förderrichtung
- Y: Querrichtung
- Y₀: ungeeignete Querposition
- Y₁: geeignete Querposition
- Y_{DH}: Abstand zwischen Bearbeitungsmittel D und Hilfsmittel H
- Z: Höhenrichtung
- ΔY: Versatz in Querrichtung Y

## Patentansprüche

1. Bearbeitungsstation (T) zum Fördern und Bearbeiten von diskreten Produkten (P) in einem Produktstrom, wobei sich die Bearbeitungsstation (T) in einer Förderrichtung (X), einer dazu orthogonalen Querrichtung (Y) und einer zu diesen beiden Richtungen orthogonalen Höhenrichtung (Z) erstreckt, und wobei die Bearbeitungsstation einen im regulären Betrieb an einem Gestell ortsfest positionierten Grundkörper (G) aufweist,
a) wobei die Bearbeitungsstation (T) eine Bearbeitungseinheit (B) aufweist, die ihrerseits eine Fördereinheit (M), wenigstens ein Bearbeitungsmittel (D) und wenigstens ein dem wenigstens einen Bearbeitungsmittel zugeordnetes Hilfsmittel (H) umfasst,
b) und wobei die Fördereinheit (M) dazu ausgebildet ist, Produkte (P) in Förderrichtung (X) entlang einer von der Fördereinheit (M) gebildeten Förderebene (E) zu transportieren,
c) und wobei das Bearbeitungsmittel (D) zur Bearbeitung eines Produkts (P) ausgebildet ist, während dieses von der Fördereinheit (M) gefördert oder vorübergehend angehalten wird, und wobei die Bearbeitung unter Verwendung des dem jeweiligen Bearbeitungsmittel (D) zugeordneten Hilfselements (H) erfolgt,
**dadurch gekennzeichnet,**
d) **dass** sich das wenigstens eine Hilfselement (H) und das wenigstens eine Bearbeitungsmittel (D) jeweils zumindest teilweise oberhalb der Förderebene (E) erstrecken, und
e) **dass** das wenigstens eine Bearbeitungsmittel (D) und das ihm für die Bearbeitung des Produkts (P) zugeordnete wenigstens eine Hilfselement (H)
e₁) auf zwei in Querrichtung (Y) einander gegenüberliegenden Seiten eines von der Fördereinheit (M) geförderten Produkts (P) an der Bearbeitungseinheit (B) fixiert sind, und
e₂) gemeinsam mit der Fördereinheit (M) und relativ zum Grundkörper (G) in Querrichtung (Y) verfahrbar sind (Relativbewegung), um ein der Bearbeitungseinheit (B) zuzuführendes Produkt (P) an einer vorgebbaren Y-Position der Förderebene (E) oder der Fördereinheit (M) aufzunehmen und zwischen dem Hilfselement (H) und dem Bearbeitungsmittel (D) hindurch zu fördern.

2. Bearbeitungsstation (T) nach Anspruch 1, ferner umfassend eine stromaufwärts der Bearbeitungseinheit (B) angeordnete, im regulären Betrieb ortsfeste Zufuhreinheit (A), die dazu ausgebildet ist, auf ihr aufliegend geförderte Produkte (P) in Förderrichtung (X) zu fördern und der Fördereinheit (M) der Bearbeitungseinheit (B) zuzuführen.

3. Bearbeitungsstation (T) nach einem der vorigen Ansprüche, **dadurch gekennzeichnet, dass** die Bearbeitungseinheit (B) von einer mit dem Grundkörper (G) verbundenen, automatisch oder manuell betriebenen Führung (L), insbesondere Linearführung (L), getragen wird, welche die Relativbewegung der Bearbeitungseinheit (B) in Querrichtung (Y) ermöglicht.

4. Bearbeitungsstation (T) nach einem der vorigen Ansprüche, wobei das wenigstens eine Bearbeitungsmittel (D)
a) als Kennzeichnungseinheit, insbesondere als Druckeinheit (D₁) ausgebildet ist, um ein Produkt (P) auf einer Seitenfläche, vorzugsweise einer dem Hilfselement (H) abgewandten Seitenfläche, zu bedrucken, und/oder
b) als Inspektionseinheit (D₂) ausgebildet ist, um
b₁) ein das Produkt (P) kennzeichnendes Merkmal, insbesondere eine auf dem Produkt (P) aufgebrachte Kennzeichnung,
oder
b₂) eine mit Detektionsmitteln erfassbare Produkteigenschaft, insbesondere eine Inhomogenität oder einen Fremdkörper,
zu erfassen.

5. Bearbeitungsstation (T) nach einem der vorigen Ansprüche, wobei das wenigstens eine Hilfselement (H)
a) als Führungselement (H_{F}) mit einer Führungsfläche (F) ausgebildet ist, um ein auf der Förderebene (E) gefördertes Produkt (P) entlang der Führungsfläche (F) in Querrichtung (Y) in definierter Y-Position zu führen,
und/oder
b) als Lichtschutz (H_{L}) oder Hintergrundbeleuchtung oder als Strahlungsquelle ausgebildet ist.

6. Bearbeitungsstation (T) nach einem der vorigen Ansprüche, wobei wenigstens ein Hilfselement (H) ein weiteres Bearbeitungsmittel (D*) gemäß Anspruch 4a) oder Anspruch 4b) umfasst.

7. Bearbeitungsstation (T) nach einem der vorigen Ansprüche, wobei wenigstens ein Bearbeitungsmittel (D) und/oder ein Hilfsmittel (H) in Querrichtung (Y) und/oder Höhenrichtung (Z) manuell oder automatisch einstellbar und fixierbar ist, um unterschiedlich breite und/oder hohe Produkte (P) führen und/oder bearbeiten zu können.

8. Bearbeitungsstation (T) nach einem der vorigen Ansprüche, wobei
a) ein die wenigstens eine Bearbeitungseinheit (B) wenigstens teilweise
umgebendes Gehäuse,
und/oder
b) eine/ein überwiegend der wenigstens einen Bearbeitungseinheit (B) zugeordnete Steuerung und/oder Auswerteeinheit und/oder Anzeigeeinheit und/oder Schaltschrank ortsfest mit dem Grundkörper (G) verbunden ist.

9. Verfahren zur Bearbeitung eines Produkts (P) mittels einer Bearbeitungsstation (T) nach einem der vorigen Ansprüche und Anspruch 2, umfassend folgende Schritte:
10) Positionierung der Bearbeitungseinheit (B) in Querrichtung (Y) relativ zur Zuführeinheit (A) in Abhängigkeit derjenigen Position, in welcher das Produkt (P) auf der Zuführeinheit (A) im Moment der Übergabe an die Fördereinheit (M) bereitgestellt wird,
20) Förderung wenigstens eines Produkts (P) mittels Zuführeinheit (A) und automatische Übergabe des Produkts (P) an die Fördereinheit (M) der Bearbeitungseinheit (B) mit anschließender Förderung des Produkts (P) in Förderrichtung (X) und Bearbeitung des Produkts (P) durch das Bearbeitungsmittel (D) und dem diesem zugeordneten Hilfsmittel (H).

10. Verfahren nach Anspruch 9, wobei vor dem Verfahrensschritt 10) noch folgender Schritt ausgeführt wird:
05) Positionierung des wenigstens einen Bearbeitungsmittels (D) und des ihm zugeordneten Hilfsmittels (H) in Querrichtung Y relativ zur Fördereinheit (M) in Abhängigkeit eines zu fördernden Produkts (P), insbesondere Einstellung eines Abstands (Y_{DH}) in Querrichtung (Y) zwischen dem wenigstens einen Bearbeitungsmittel (D) und dem ihm zugeordneten Hilfsmittel (H).

11. Verfahren nach einem der vorhergehenden Ansprüche und Anspruch 5a), wobei sich die Führungsfläche (F) im Wesentlichen in Förderrichtung (X) erstreckt, wobei die Positionierung der Bearbeitungseinheit (B) in Querrichtung (Y) derart erfolgt, dass
i) ein Abschnitt einer Außenfläche des Produkts (P) mit der Führungsfläche (F) fluchtet, sodass das Produkt (P) nach der Übergabe an die Bearbeitungseinheit (B) von dem Führungselement (H_{F}) seitlich geführt wird, und/oder
ii) ein Abschnitt einer Außenfläche des Produkts (P) nach der Übergabe an die Bearbeitungseinheit (B) auf der Förderebene (E) eine vorgebbare, für die Bearbeitung mit dem Bearbeitungsmittel (D) erforderliche Y-Position einnimmt.

12. Verfahren nach Anspruch 9 oder 10, wobei die Positionierung der Bearbeitungseinheit (B) in Querrichtung (Y) derart erfolgt, dass das Produkt (P) oder eine darauf angeordnete Kennzeichnung nach der Übergabe des Produkts (P) an die Bearbeitungseinheit (B) auf der Förderebene (E) eine Y-Position so einnimmt,
a) dass ein Bereich des Produkts (P), der von einer als Kamera (D₂) ausgeführten Inspektionseinheit erfasst werden soll, im Fokussierbereich der Kamera liegt,
oder
b) dass die von einer Röntgenquelle (H_{RQ}) ausgehenden Röntgenstrahlen das gesamte Produkt (P) durchstrahlen.
